Europäisches Patentamt

European Patent Office

Office européen des brevets

(19)

(11) Publication number: **0 289 675 B1**

## (12) EUROPEAN PATENT SPECIFICATION

(45) Date of publication of patent specification: **18.12.91**

(51) Int. Cl.⁵: **F02B 29/08, F02B 31/00, F01L 3/06**

(21) Application number: **87304131.3**

(22) Date of filing: **08.05.87**

(54) **A method, and a valving arrangement, for improving air-fuel mixing.**

(43) Date of publication of application:
**09.11.88 Bulletin 88/45**

(45) Publication of the grant of the patent:
**18.12.91 Bulletin 91/51**

(84) Designated Contracting States:
**DE FR GB IT NL**

(56) References cited:
EP-A- 0 045 669          DE-A- 2 749 730
DE-A- 3 141 663          DE-A- 3 515 043
FR-A- 685 210            US-A- 3 046 960
US-A- 4 064 849          US-A- 4 133 322

(73) Proprietor: **INGERSOLL-RAND COMPANY
200 Chestnut Ridge Road
Woodcliff Lake New Jersey 07675-8738(US)**

(72) Inventor: **Chen, Tze-Ning
136 Clover Lane
Princeton New Jersey 08540(US)**
Inventor: **Onuschak, Anthony D.
6 Langley Road
Kendall Park New Jersey 08824(US)**

(74) Representative: **Adams, William Gordon et al
RAWORTH, MOSS & COOK 36 Sydenham
Road
Croydon Surrey CR0 2EF(GB)**

## Description

This invention pertains to a novel method, and a valving arrangement for improving fuel/air mixing when gaseous fuel is directly injected either into a cylinder or into the cylinder's air intake passage during the intake process and, in particular, to such a method and valving arrangement which provides for a high-velocity air injection into the cylinder to improve air-fuel admixing swirl.

In a turbocharged, scavenged gas engine, for example, the gaseous fuel is generally injected directly into the cylinder during the intake stroke. The mixing of the fuel and air streams depends on the flow pattern and turbulence which, in turn, are affected by the intake passage configuration and the valve size and location relative to the fuel injection point. Experience shows us that the mixing is generally poor, and that the mixture at the end of the compression stroke is far from homogeneous. Although limited improvements can be made by optimizing the air intake passage direction to generate swirl , the results are not good enough, from the standpoint of minimizing exhaust emission, and cycle-to-cyle variations in firing pressure. An improved method and a valving arrangement for improving the mixing has been needed.

EP-A-0 045 669 discloses an internal combustion engine in which the inlet valve is opened on the downstroke of the piston towards bottom dead centre and remains open after bottom dead centre as the piston commences the upstroke to reduce the volume of the cylinder available for the compression stroke which commences when the inlet valve is closed.

DE-A-3 141 663 describes a valving arrangement for a combustion engine in which an inlet valve cooperates with a seat in such manner that, as the valve opens, the initial flow into the cylinder is directed towards the spark plug. This initial directional flow is achieved by a slot in the valve element or the valve seating.

It is an object of this invention to set forth a needed method and a valving arrangement for improving air-fuel mixing.

It is particularly an object of this invention to set forth a method for improving air-fuel mixing, in an engine having a) fuel injection, b) a cylinder with a reciprocating piston, and c) an air intake valve, comprising the steps of opening the valve when the piston proceeds to move in its downstroke holding the valve open as the piston downstrokes at least until fuel is injected; injecting fuel as the piston nears its bottom dead centre; closing the valve to within from approximately ten to two percent of its full lift, until the piston reaches bottom dead centre to induce a high-velocity air injection; and fully closing the valve coincident with the piston reaching bottom dead centre.

According to one aspect of the present invention, there is provided a method for improving air-fuel mixing in an engine having a) a cylinder with a reciprocating piston, b) means for supplying fuel to the cylinder, and c) an air intake valve with a valve seat for the cylinder in which fuel is supplied to the cylinder during the downstroke of the piston towards bottom dead centre and the valve is opened during such downstroke to create an air-fuel mixture in the cylinder characterized in that, following the supply of fuel to the cylinder, the valve is closed to within approximately ten to two per cent of its full displacement, and held thereat until the piston reaches bottom dead centre, to induce a high velocity stream of air into the cylinder to enhance air-fuel mixing therein just before fully closing the valve, and then the valve is fully closed as the piston reaches bottom dead centre so that the air-fuel mixture is compressed during the ensuing upstroke of the piston, wherein the valve is closed on the seat to within approximately ten to two per cent of its full displacement, as aforesaid, by substantially closing off only one side of the valve to introduce the high velocity stream of air into the cylinder only via the other side of the valve.

According to another aspect of the present invention, there is provided a valving arrangement for performing the method defined in the preceding paragraph, the valving arrangement essentially comprising a circular valve element and a circular seat for the valve element wherein the seat has a land upon which sealingly to receive the valve element, said valve element has a shoulder a) for closure on to said land, in a first position to interdict fluid flow between the seat and the element and b) for removal from said land to a second position to permit fluid flow therebetween characterized in that said valve element and said seat have further complementary mating surfaces which, during movement of said element from said second position towards said first position come into substantially sealing closure therebetween at only one side of the seat to direct and to accommodate fluid flow through a crescent-shaped space substantially at the side of the seat which is opposite said one side; wherein the seat has an inlet side and an outlet side and one of the mating surfaces is defined on an annular surface of the seat having a plurality of radii to provide with the mating complementary surface the sealing closure at one of the aforesaid sides.

For a better understanding of the invention and to show how the same may be carried into effect, reference will now be made, by way of example, to the accompanying drawings, in which:-

Figure 1 is a side view of an embodiment of the novel valving arrangement, the same showing the valve in full line illustration, and the valve seat in a diametrical cross-section;

Figure 2 is a bottom view of the valve seat of Figure 1, taken along line 2 - 2 in Figure 1, and showing the valve only in phantom;

Figure 3 is a side view like that of Figure 1 in which, however, the early closure of a side of the value occurs at the inlet side of the value instead (as shown in Figure 1) of at the outlet side; and

Figure 4 is a bottom view of the value seat of Figure 3, corresponding generally to Figure 2, in which only the early-closing shoulder of the value is shown in phantom.

According to one aspect, the method for improving the air-fuel mixing in a gas engine, is to inject the fuel into the air intake passage so that partial mixing is established prior to entry of the air and fuel through the value. The high-velocity of the air and fuel through the value, and the turbulence generated thereby, will cause further improved mixing in the cylinder.

According to another aspect of the novel method, the air intake value for the cylinder closes down following the normal curve; i.e., as a fuel gas in injected, and the piston approaches bottom dead center. However, when the value closes to about ten to two percent of its full displacement, it is teaching of this invention to keep the value at this limited opening until the piston completes the remainder of the downstroke. Due to expansion of the air in the cylinder, the pressure differential increases during this period when the value is merely cracked open, and therefore the velocity of the air jet entering the cylinder increases significantly. Although due to the small opening the net mass flow is a small portion of the total air intake, the momentum of the air jet is high enough to improve the flow field in the cylinder. Coincident with the piston reaching bottom dead center, then, the valve must be fully closed.

The novel method also comprehends injecting a high-velocity air stream into the cylinder through only one side of the air intake valve just before the piston reaches bottom dead center.

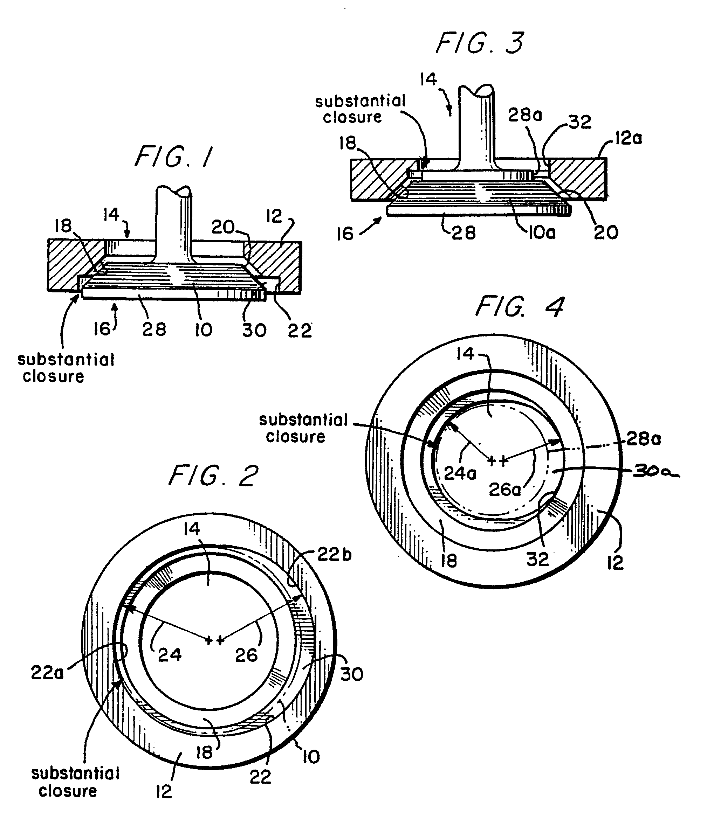

While those skilled in this art may conceive of other means for practicing our invention, the embodiments of Figure 1 - 4 depict the best modes contemplated by us for carrying out the invention.

As shown in Figures 1 and 2, an air intake valve 10 for a cylinder (not shown) closes upon, and removes from, a valve seat 12, to control flow of fluid (i.e., air or air and fuel) therethrough from the inlet 14 to the outlet 16.

The seat 12 has a land 18 which is concentric with a sealing surface 20 formed on the valve 10. Consequently, as is conventional, when the surface 20 closes upon the land 18, no fluid can flow between the inlet 14 and outlet 16. However, our valving arrangement comprises means for effecting an early closure of one side of the valve 10 before the closure of the other side.

Seat 12 has a recess 22 formed of two radii. A first radius 24 forms the half 22a of the recess 22 which is at the left (in Figures 1 and 2), and a second radius 26 forms the half 22b of the recess 22 which is at the right. The valve 10 has an outermost shoulder 28 which effects a substantial closure of the valve at the left-hand side thereof, as the shoulder 28 and half 22a matingly substantially close upon each other; radius 24 closely approximates the radius of recess half 22a. Between recess half 22b and shoulder 28, however, there obtains a crescent-shaped space 30 which communicates with the annular void between land 18 and surface 20. It is through this space 30 that fluid enters the cylinder (not shown) at a high velocity to enhance a swirl in the cylinder, just prior to full valve closure.

Figures 3 and 4 depict an alternative valving arrangement in accordance with the invention. Here, similar or same index numbers denote similar or same components or structures as are presented in Figures 1 and 2. A valve 10a has a seat 12a defining the inlet 14 and outlet 16. In this embodiment, early closure of one side (i.e., the left side) of the valve 10a occurs at the inlet 14, whereas in the Figures 1 and 2 embodiment it occurred at the outlet 16.

The seat 12a has a surface 32 defined by two radii 24a and 26a. The former is a mating complement to a smallerdiameter shoulder 28a formed on the valve 10a, whereas the latter defines another crescent-shaped space 30a with shoulder 28a.

## Claims

1. A method for improving air-fuel mixing in an engine having a) a cylinder with a reciprocating piston, b) means for supplying fuel to the cylinder, and c) an air intake valve (10, 10a) with a valve seat (12, 12a) for the cylinder in which fuel is supplied to the cylinder during the downstroke of the piston towards bottom dead centre and the valve (10) is opened during such downstroke to create an air-fuel mixture in the cylinder

characterized in that, following the supply of fuel to the cylinder, the valve (10) is closed to within approximately ten to two per cent of its full displacement, and held thereat until the piston reaches bottom dead centre, to induce a high velocity stream of air into the cylinder to enhance air-fuel mixing therein just before fully closing the valve (10), and then the valve (10) is fully closed as the piston reaches bottom dead centre so that the air-fuel mixture is compressed during the ensuing upstroke of the piston, wherein the valve (10, 10a) is closed on the seat (12, 12a) to within approximately ten to two per cent of its full displacement, as aforesaid, by substantially closing off only one side (28, 22a; 28a, 24a) of the valve (10) to introduce the high velocity stream of air into the cylinder only via the other side of the valve.

2. A method according to claim 1, characterized in that, to introduce the stream of air into the cylinder only via the other side of the valve (10, 10a), a crescent-shaped space (30, 30a) is provided between the valve (10, 10a) and the seat (12, 12a), at the aforesaid other side of the valve.

3. A method according to claim 1 or 2, in which the fuel is injected directly into the cylinder.

4. A valving arrangement for performing the method according to claim 1, 2 or 3, comprising a circular valve element (10, 10a) and a circular seat (12, 12a) for the valve element (10, 10a) wherein the seat has a land (18) upon which sealingly to receive the valve element, said valve element has a shoulder (28, 28a) a) for closure on to said land, in a first position to interdict fluid flow between the seat (12, 12a) and the element (10, 10a) and b) for removal from said land to a second position to permit fluid flow therebetween

characterized in that said valve element (10, 10a) and said seat (12, 12a) have further complementary mating surfaces (28, 22a; 28, 32) which, during movement of said element from said second position towards said first position come into substantially sealing closure therebetween at only one side of the seat (12, 12a) to direct and to accommodate fluid flow through a crescent-shaped space (30, 30a) substantially at the side of the seat which is opposite said one side; wherein the seat (12, 12a) has an inlet side (14) and an outlet side (16) and one of the mating surfaces (22a or 32) is defined on an annular surface of the seat having a plurality of radii (24, 26 or 24a, 26a) to provide with the mating complementary surface (28 or 28a) the sealing closure at one of the aforesaid sides (14 or 16).

## Revendications

1. Un procédé d'amélioration du mélange air/carburant dans un moteur comportant:

a) un cylindre associé à un piston animé d'un mouvement de va-et-vient,
b) des moyens d'amenée de carburant vers le cylindre précité, et
c) une soupape d'admission d'air (10, 10a) comprenant un siège de soupape (12, 12a) pour le cylindre qui est alimenté en carburant pendant la course descendante du piston vers son point mort bas, cependant que la soupape (10) est ouverte pendant ladite course descendante afin de réaliser un mélange air/carburant dans le cylindre, caractérisé en ce qu'après l'admission du carburant dans le cylindre, la soupape (10) est fermée à concurrence d'environ dix à deux pour-cent de sa course totale, et maintenue dans cette position jusqu'à ce que le piston atteigne son point mort bas, afin de produire un écoulement d'air à vitesse élevée vers le cylindre et, par ce fait, y favoriser la formation du mélange air/carburant, immédiatement avant la fermeture complète de la soupape (10), la soupape étant ensuite fermée complètement lorsque le piston atteint le point mort bas, de sorte que le mélange air/carburant est comprimé pendant la course ascendante consécutive du piston, la soupape (10, 10a) étant fermée à concurrence d'environ dix à deux pour-cent de sa course totale, comme déjà indiqué, par l'obturation sensiblement complète d'un seul côté (28, 22a; 28a, 24a) de la soupape (10) de manière à introduire l'écoulement d'air à vitesse élevée seulement par l'autre côté de la soupape.

2. Un procédé selon la revendication 1, caractérisé en ce que, pour introduire l'écoulement d'air dans le cylindre sur un seul côté de la soupape (10, 10a), il est prévu un intervalle (30, 30a) en forme de croissant entre la soupape (10, 10a) et le siège (12, 12a), sur l'autre côté précité de la soupape.

3. Un procédé selon la revendication 1 ou 2, dans lequel le carburant est injecté directement dans le cylindre.

4. Un agencement de soupape pour la mise en oeuvre du procédé selon la revendication 1, 2 ou 3, comportant un organe de soupape circulaire (10, 10a) et un siège circulaire (12, 12a) associé à l'organe de soupape (10, 10a), ledit siège comportant une zone (18) qui reçoit en contact étanche ledit organe de soupape qui comporte un épaulement (28, 28a) appelé, d'une part à s'appliquer de manière étanche sur ladite zone, dans une première position pour empêcher tout fluide de s'écouler entre le siège (12, 12a) et l'organe (10, 10a), et d'autre part à s'écouler de ladite zone en se déplaçant vers une deuxième position afin de permettre l'écoulement du fluide, caractérisé en ce que ledit organe de soupape (10, 10a) et ledit siège (12, 12a) présentent des surfaces complémentaires additionnelles qui, pendant le déplacement de l'organe à partir de ladite deuxième position vers la première position entrent en contact sensiblement étanche sur un seul côté du siège (12, 12a) pour diriger et contrôler l'écoulement de fluide à travers un espace en forme de croissant (30, 30a), sensiblement sur le côté du siège qui est opposé au côté susmentionné, ledit siège (12, 12a) présentant un côté d'entrée (14) et un côté de sortie (16) cependant qu'une des surfaces complémentaires (22a ou 32) est définie sur une surface annulaire du siège qui présente une pluralité de rayons (24, 26 ou 24a, 26a) de manière à assurer avec la surface complémentaire correspondante (28 ou 28a) l'obturation sur l'un des côtés précités.

**Patentansprüche**

1. Verfahren zur Verbesserung der Luft-Kraftstoff-Mischung in einem Motor, der
   a) einen Zylinder mit einem Hubkolben,
   b) Einrichtungen für die Zuführung von Kraftstoff in den Zylinder, und
   c) ein Lufteinlaßventil (10, 10a) mit einem Ventilsitz (12, 12a) für den Zylinder aufweist, wobei dem Zylinder Kraftstoff während des Abwärtshubes des Kolbens zum unteren Totpunkt zugeführt wird und wobei das Ventil (10) während des Abwärtshubes geöffnet wird, um eine Luft-Kraftstoff-Mischung in dem Zylinder zu erzeugen,
   dadurch **gekennzeichnet,** daß auf die Zuführung von Kraftstoff in den Zylinder folgend das Ventil (10) bis auf etwa zwischen 10 und 2 % seiner vollen Verschiebung geschlossen wird und dort gehalten wird, bis der Kolben den unteren Totpunkt erreicht, um einen Hochgeschwindigkeitsstrom von Luft in den Zylinder hinein zu induzieren, um die Luft-Kraftstoff-Mischung darin zu verbessern, gerade bevor das Ventil (10) voll geschlossen wird, und wobei das Ventil (10) dann vollständig geschlossen wird, wenn der Kolben den unteren Totpunkt erreicht, so daß die Luft-Kraftstoff-Mischung während des folgenden Aufwärtshubes des Kolbens komprimiert wird, wobei das Ventil (10, 10a) auf den Sitz (12, 12a) bis auf etwa zwischen 10 und 2 % seiner vollen Verschiebung geschlossen wird, wie oben beschrieben, indem im wesentlichen nur eine Seite (28, 22a; 28a, 24a) des Ventils (10) abgeschlossen wird, um den Hochgeschwindigkeitsstrom von Luft in den Zylinder nur über die andere Seite des Ventils einzuleiten.

2. Verfahren nach Anspruch 1, dadurch **gekennzeichnet,** daß, um den Strom von Luft in den Zylinder nur über die andere Seite des Ventils (10, 10a) einzuleiten, ein sichelförmiger Abstand (30, 30a) zwischen dem Ventil (10, 10a) und dem Sitz (12, 12a) auf der anderen Seite des Ventils vorgesehen ist.

3. Verfahren nach Anspruch 1 oder 2, dadurch **gekennzeichnet,** daß der Kraftstoff direkt in den Zylinder eingespritzt wird.

4. Ventil-Anordnung zur Durchführung des Verfahrens nach Anspruch 1, 2 oder 3, die ein kreisförmiges Ventilelement (10, 10a) und einen kreisförmigen Sitz (12, 12a) für das Ventilelement (10, 10a) aufweist, wobei der Sitz eine Kante (18) hat, auf der das Ventilelement abdichtend aufgenommen wird, wobei das Ventilelement eine Schulter (28, 28a) hat,
   a) die einen Verschluß mit der Kante bildet, um in einer ersten Stellung einen Fluid-Fluß zwischen dem Sitz (12, 12a) und dem Element (10, 10a) zu versperren, und
   b) die durch Entfernung von der Kante in eine zweite Stellung einen Fluid-Fluß dazwischen gestattet,
   dadurch **gekennzeichnet,** daß das Ventil-Element (10, 10a) und der Sitz (12, 12a) weitere sich ergänzende, zusammenwirkende Oberflächen (28, 22a; 28, 32) haben, die während der Bewegung des Elementes aus der zweiten Stellung in die erste Stellung auf nur einer Seite des Sitzes (12, 12a) in einen im wesentlichen abdichtenden Verschluß dazwischen gelangen, um den Fluid-Fluß durch einen sichelförmigen Abstand (30, 30a) im wesentlichen auf der Seite des Sitzes, der der einen Seite gegenüberliegt, zu leiten und aufzunehmen, wobei der Sitz (12, 12a) eine Einlaß-Seite (14) und eine Auslaß-Seite (16) hat und eine der zusammenwirkenden Oberflächen (22a oder 32) auf einer ringförmigen Oberfläche des Sitzes festgelegt ist, die eine Vielzahl von Radien (24, 26 oder 24a, 26a) hat, um mit den zusammenwirkenden, sich ergänzenden Oberflächen (28 oder 28a) den abdichtenden Verschluß auf einer der genannten Seiten (14 oder 16) zu erzeugen.

FIG. 3

FIG. 1

FIG. 4

FIG. 2